# EUROPÄISCHE PATENTSCHRIFT

(11) **EP 2 961 635 B1**
(45) Veröffentlichungstag und Bekanntmachung des Hinweises auf die Patenterteilung: **28.12.2016**
(21) Anmeldenummer: 14706283.0
(22) Anmeldetag: 27.01.2014
(51) Int. Cl.: G02F 1/1335, G02F 1/1333

(54) **RÜCKSPIEGELANORDNUNG FÜR KRAFTFAHRZEUGE**
REAR VIEW MIRROR ASSEMBLY FOR VEHICLES
SYSTÈME DE RÉTROVISEUR POUR VÉHICULES À MOTEUR

(30) Priorität: 01.03.2013 DE 102013203530
(43) Veröffentlichungstag der Anmeldung: 06.01.2016
(73) Patentinhaber: Magna Mirrors Holding GmbH, 63877 Sailauf (DE)
(72) Erfinder: KREBS, Peter, 63776 Mömbris (DE)
(74) Vertreter: Völger, Silke Beatrix
(86) Internationale Anmeldenummer: PCT/DE2014/200028
(87) Internationale Veröffentlichungsnummer: WO 2014/131406

(56) Entgegenhaltungen:
- EP-A2- 0 496 155
- DE-A1- 4 021 926
- US-A- 4 634 835
- US-A- 5 448 397
- US-A1- 2004 240 029

## Beschreibung

Die vorliegende Erfindung betrifft eine Rückspiegelanordnung für Kraftfahrzeuge.

Rückspiegelanordnungen für Kraftfahrzeuge besitzen eine reflektierende Fläche, die das Beobachten des rückwärtigen Verkehrs ermöglicht. Üblicherweise sind die Rückspiegelanordnungen zusätzlich abblendbar ausgebildet. Hierdurch wird bei der Fahrt in der Dunkelheit ein Blenden durch hinterherfahrende Fahrzeuge vermieden. Bei automatisch abblendbaren Rückspiegelanordnungen messen bzw. erfassen Lichtsensoren den Helligkeitsunterschied zwischen Autovorfeld und rückwärtigem Verkehrsraum. Die Messwerte werden dann an eine Auswerte- und Steuerelektronik weitergeleitet und das Reflexionsvermögen der Spiegelanordnung entsprechend verändert. Hierbei werden Spiegelbaugruppen verwendet, die optische Zellen umfassen. Diese optischen Zellen können beispielsweise als Flüssigkristall-Zellen ausgebildet sein. Bei diesen Spiegelanordnungen ist bei Anlegen eines elektrischen Feldes das Reflexionsvermögen veränderbar.

Zusätzlich sind die Rückspiegelanordnungen für den Außenbereich häufig beheizbar ausgeführt. Hierdurch wird eine Beeinträchtigung der Sicht insbesondere in den Wintermonaten durch Wassertropfen, Frost, Vereisung vermieden. Konventionelle, nicht mit einer optischen Zelle ausgestattete Spiegelanordnungen umfassen dabei eine Glasplatte, eine reflektierende Beschichtung und eine auf der Rückseite der reflektierenden Beschichtung angeordnetes Flächenheizelement. Dieses Flächenheizelement ist üblicherweise eine Trägerfolie, die eine elektrische Widerstandsheizung umfasst und mit der reflektierenden Beschichtung verklebt wird. Das Flächenheizelement ist dabei auf einer Trägerplatte angeordnet, die die Spiegelbaugruppe trägt. Die durch das Widerstandselement erzeugte Wärme wird dabei durch die reflektierende Beschichtung zu der nach außen weisenden Glasplatte geleitet, um dort die Außenfläche beispielsweise zu enteisen.

Für eine Spiegelbaugruppe, die eine Flüssigkristallzelle umfasst, sind die bekannten eingangs beschriebenen Flächenheizelemente und deren Anordnung allerdings ungeeignet. Eine Verklebung von Trägerplatte-Flächenheizelement-Flüssigkristallzelle-Glasplatte führt zu Verspannungen aufgrund der Toleranzen der Einzelteile innerhalb der Flüssigkristallzelle. Diese Verspannungen bewirken in der Flüssigkristallzelle Anhäufungen von Flüssigkristallen des Flüssigkristallmediums, was zu deutlichen, dunklen Flecken des für den Benutzer sichtbaren optischen Bildes führt.

Eine beheizbare Spiegelbaugruppe, die eine optische Zelle umfasst, ist aus der US 2004/0240029 A1 bekannt. Bei dieser vorbekannten Spiegelbaugruppe ist die optische Zelle über ein Medium mit einem Reflektor verbunden. In einer Ausführungsvariante ist es vorgesehen, den Reflektor als Heizung auszuführen. Eine weitere Ausführungsvariante sieht vor, dass zwischen optischer Zelle und Reflektor ein beheizbarer Luftspalt vorgesehen ist.

Eine weitere beheizbare Spiegelbaugruppe, die eine auf einer Trägerplatte angeordnete Flüssigkristallzelle aufweist, ist aus der US 5,448,397 A bekannt, die den Oberbegriff des Anspruchs 1 bildet. Die Spiegelbaugruppe weist eine vorderseitig angeordnete Glasplatte und eine rückseitig zur Trägerplatte weisende Glasplatte auf, wobei an der Rückseite der rückseitigen Glasplatte eine Heizschicht angeordnet ist.

Aufgabe der vorliegenden Erfindung ist es daher, eine automatisch abblendbare beheizbare Rückspiegelanordnung für ein Kraftfahrzeug mit einer optischen Flüssigkristallzelle derart weiterzubilden, dass die Rückspiegelanordnung ein für den Fahrzeuginsassen als Benutzer dauerhaft einwandfreies optisches Bild erzeugt.

Diese Aufgabe wird durch die im Anspruch 1 angegebenen Merkmale gelöst.

Durch die im Anspruch 1 angegebene Rückspiegelanordnung, wobei auf der Trägerplatte ein Flächenheizelement angeordnet ist, welches eine Wärmestrahlung erzeugt und zwischen der Trägerplatte und der Spiegelbaugruppe ein Gehäusespalt verbleibt, und wobei die Wärmestrahlung auf eine auf der reflektierenden Beschichtung der Spiegelbaugruppe angeordneten strahlungsabsorbierenden Beschichtung übertragen wird, werden die oben genannten Nachteile vermieden. Die Spiegelbaugruppe mit optischer Zelle ist nicht starr mit dem Flächenheizelement und der Trägerplatte verbunden, wodurch Verspannungen vermieden werden.

Weitere vorteilhafte Ausgestaltungen und Weiterbildungen der erfindungsgemäßen Rückspiegelanordnung ergeben sich aus den Unteransprüchen.

Bevorzugte Ausführungsformen der Rückspiegelanordnung für ein Kraftfahrzeug werden nachfolgend beispielshalber beschrieben, wobei veranschaulichend auf die beigefügten Zeichnungen Bezug genommen wird.

Es zeigen:
- Fig. 1: eine schematische Ansicht einer Rückspiegelanordnung als Außenspiegelanordnung; und
- Fig. 2: einen Ausschnitt aus einem Querschnitt einer Spiegelanordnung.

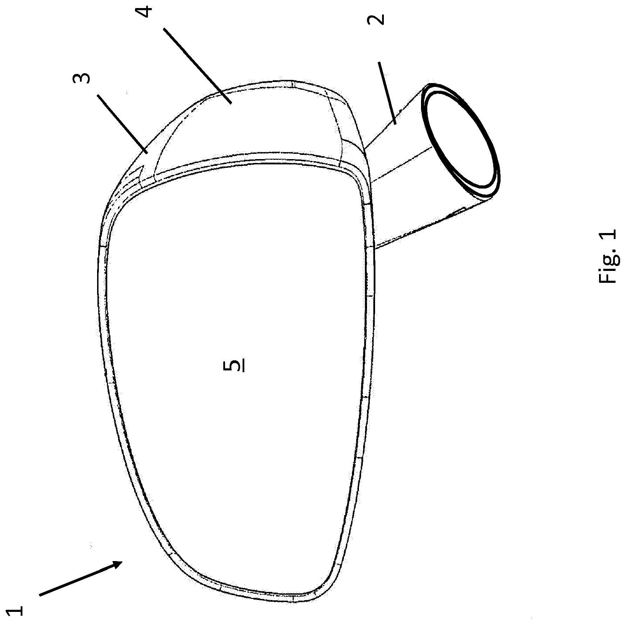

Die Figur 1 zeigt in einer Ansicht einen als Fahrzeugaußenspiegel 1 ausgebildete Rückspiegelanordnung, der einen Spiegelfuß 2 sowie einen Spiegelkopf 3 umfasst. Der Fahrzeugaußenspiegel 1 wird in bekannter Weise an der Fahrer- bzw. Beifahreraußenseite des Kraftfahrzeugs befestigt. Der Spiegelkopf 3 ist dabei klappbar an dem Spiegelfuß 2 angeordnet und weist ein Gehäuse 4 aus einem thermoplastischen Kunststoffmaterial auf. Das Gehäuse 4 ist halbschalenförmig ausgeführt und weist einen Aufnahmeraum auf, der nach vorne hin eine Aufnahmeöffnung aufweist. In dem Aufnahmeraum ist eine Spiegelbaugruppe 5 eingesetzt, die üblicherweise auf einer im Aufnahmeraum des Spiegelgehäuses 4 angeordneten verstellbaren als Gehäuseelement ausgebildeten Trägerplatte 6 gelagert ist. Des Weiteren ist ein Lichtsensor vorgesehen, mit dem die Lichtintensität der Umgebung aus Richtung des nachfolgenden Verkehrs erfasst wird. Zusätzlich wird die Lichtintensität des Vorfeldes des Kraftfahrzeuges erfasst. In Abhängigkeit der gemessenen Signale wird dann eine Ansteuerung und Abdunkelung der Spiegelbaugruppe 5 bewirkt.

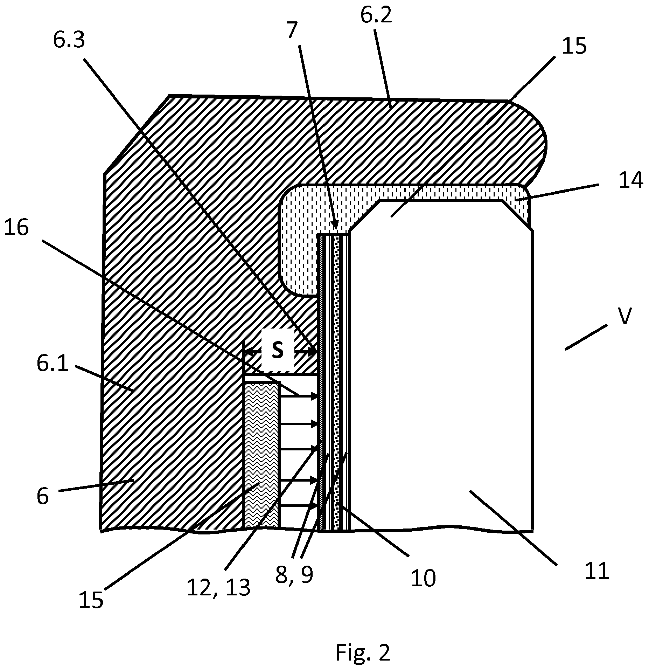

Anhand der Figur 2 wird nachfolgend ein Ausschnitt aus einem Querschnitt der erfindungsgemäßen Rückspiegelanordnung 1 beschrieben, die mit einer automatischen Abblendfunktion ausgestattet und beheizbar ausgebildet ist. Auf die Darstellung und näheren Beschreibung der die Lichtintensität erfassenden Sensoren, die Ansteuer- und Auswerteelektronik wird verzichtet. Diese ist dem Fachmann aus dem Stand der Technik bekannt.

Zur Veränderung des Reflexionsgrades umfasst die erfindungsgemäße Spiegelbaugruppe 5 eine Flüssigkristallzelle 7. Diese weist eine transparente vorderseitige Trägerschicht 8, eine transparente rückseitige Trägerschicht 9 und eine zwischen den Trägerschichten 8,9 angeordnete elektrisch ansteuerbare ein Flüssigkristallmedium umfassende Flüssigkristallschicht 10 auf. Zur elektrischen Ansteuerung ist die Flüssigkristallschicht 10 zwischen zwei transparenten elektrisch leitfähigen Schichten angeordnet. Bei dieser Technologie basierend auf Flüssigkristallen wird der Effekt ausgenutzt, dass bei Anlegen eines elektrischen Feldes an die Flüssigkristallzelle 7 sich die Flüssigkristallmoleküle parallel zum elektrischen Feld orientieren. Im Grundzustand, das heißt ohne ein elektrisches Feld sind die Flüssigkristallmoleküle in Längsrichtung d.h. Durchtrittsrichtung des Lichtes ausgerichtet. Um diese Ausrichtung zu erhalten sind zusätzlich Ausrichtschichten vorgesehen. Diese Ausrichtschichten sind zwischen den elektrisch leitfähigen Schichten und der Flüssigkristallschicht 10 angeordnet.

Die transparenten Trägerschichten 8, 9 sind beispielsweise als Folien ausgebildet. Die transparenten Trägerschichten können auch als transparente Kunststoffplatte oder Glasplatte ausgeführt sein. Von der Vorderseite V der Rückspiegelanordnung 1 aus gesehen, ist auf der transparenten Trägerschicht 8 eine weitere transparente Schicht 11 angeordnet. Die Schicht 11 hat die Funktion eines Kratzschutzes und ist als Glasplatte oder Kunststoffplatte ausgebildet. Die rückseitige transparente Trägerschicht 9 ist auf der zur Trägerplatte 6 weisenden Seite mit einer nicht transparenten reflektierenden Schicht 12 versehen. Die nicht transparente reflektierende Schicht 12 ist mit einer metallischen Beschichtung versehen. Diese Schicht wird beispielsweise durch Aufdampfen oder Sputtern oder Sprühen erzeugt. Des Weiteren ist auf dieser reflektierenden Beschichtung 12 eine strahlungsabsorbierende Beschichtung 13 aufgebracht.

Wie eingangs bereits beschrieben, ist die Spiegelbaugruppe 5 auf einer Trägerplatte 6 in einem Gehause 4 gelagert. Die Trägerplatte 6 weist hierzu eine Trägerbodenplatte 6.1 und einen umlaufenden Trägerplattenrand 6.2 mit einer zur Vorderseite V weisenden Stirnfläche auf. Trägerbodenplatte 6.1 und Trägerplattenrand 6.2 bilden dabei einen nach vorne geöffneten Aufnahmeraum für die Spiegelbaugruppe 5. Die Trägerbodenplatte 6.1 ist mit Auflagerstellen 6.3 zur Abstützung der Spiegelbaugruppe 5 ausgeführt. Diese Auflagerstellen 6.3 sind beispielsweise als stegförmige Auflagerstellen ausgebildet. Bei der Halterung und Abstützung der Spiegelbaugruppe 5 auf der Trägerplatte 6 verbleibt dabei ein Spalt S zwischen Trägerplattenboden 6.1 und Spiegelbaugruppe 5. Des Weiteren verbleibt zwischen dem Trägerplattenrand 6.2 und der Spiegelbaugruppe 5 ein umlaufender Gehäusespalt, in den bei der Montage der Rückspiegelanordnung eine Dichtung 14 zur abdichtenden Halterung der Spiegelbaugruppe 5 in dem Gehäuse 4 bzw. der Trägerplatte 6 eingefügt ist.

Auf der zur Spiegelbaugruppe 5 weisenden Oberfläche der Trägerbodenplatte 6.1 ist ein Flächenheizelement 15 angeordnet. Das Flächenheizelement 15 wird vorzugsweise mit der Trägerbodenplatte 6.1 verklebt. Wie es aus der Zeichnung zu erkennen ist, ist dieses Flächenheizelement 15 beabstandet zu der Spiegelbaugruppe 5 angeordnet. Die von dem Flächenheizelement 15 erzeugte Wärmestrahlung wird dabei auf die strahlungsabsorbierende Beschichtung übertragen (Wärmestrahlung dargestellt durch die Pfeile 16. Ausgehend von der strahlungsabsorbierenden Beschichtung 13 erfolgt der Wärmetransport zu der vorderseitigen Glasplatte 11 durch Wärmeleitung.

## Patentansprüche

1. Rückspiegelanordnung (1) für Kraftfahrzeuge, mit einer Trägerplatte (6) und einer auf der Trägerplatte (6) gehaltenen Flüssigkristallzelle (7) umfassenden Spiegelbaugruppe (5) zur Beobachtung des nachfolgenden Verkehrs, wobei der Reflexionsgrad der Spiegelbaugruppe (5) durch eine Steuervorrichtung veränderbar ausgeführt ist, und wobei die Spiegelbaugruppe (5) eine vorderseitig angeordnete Glasplatte (11) und eine rückseitige zur Trägerplatte (6) weisende reflektierende Beschichtung (12) aufweist, wobei die Rückspiegelanordnung (1) beheizbar ausgeführt ist, **dadurch gekennzeichnet, dass** die Trägerplatte (6) eine Trägerbodenplatte (6.1) und einen umlaufenden Trägerplattenrand (6.2) umfasst, und die Trägerbodenplatte (6.1) mit Auflagerstellen (6.3) zur Abstützung der Spiegelbaugruppe (5) ausgebildet ist, und dass zwischen Trägerbodenplatte (6) und der Spiegelbaugruppe (5) ein Gehäusespalt (S) verbleibt, und dass auf der zur Spiegelbaugruppe (5) weisenden Oberfläche der Trägerbodenplatte (6.1) ein beabstandet zu der Spiegelbaugruppe (5) angeordnetes Flächenheizelement (15) angeordnet ist, welches eine Wärmestrahlung erzeugt, und wobei die Wärmestrahlung (16) auf eine auf der reflektierenden Beschichtung (12) der Spiegelbaugruppe (5) angeordneten strahlungsabsorbierenden Beschichtung (13) übertragen wird.

2. Rückspiegelanordnung (1) für Kraftfahrzeuge nach Anspruch 1, wobei das Flächenheizelement (15) mit der Trägerbodenplatte (6.1) verklebt ist.

3. Rückspiegelanordnung (1) für Kraftfahrzeuge nach einem der vorangehenden Ansprüche, wobei zwischen Trägerplattenrand (6.2) und Spiegelbaugruppe (5) ein umlaufender Gehäusespalt ausgebildet ist, in den eine Dichtung (14) eingefügt ist, die den Gehäusespalt vollständig abdichtend verschließt.

## Claims

1. Rear-view mirror arrangement (1) for motor vehicles, having a carrier plate (6) and having a mirror assembly (5), which is held on the carrier plate (6) and comprises a liquid-crystal cell (7), for viewing the following traffic, wherein the reflectance of the mirror assembly (5) is designed to be variable by means of a control device, and wherein the mirror assembly (5) has a glass plate (11) arranged on a front side and has a rear-side reflective coating (12) pointing toward the carrier plate (6), wherein the rear-view mirror arrangement (1) is designed to be heatable, **characterized in that**, the carrier plate (6) comprises a carrier base plate (6.1) and an encircling carrier plate rim (6.2), and the carrier base plate (6.1) is formed with bearing points (6.3) for supporting the mirror assembly (5), and **in that** a housing gap (S) remains between the carrier base plate (6) and the mirror assembly (5), and **in that**, on that surface of the carrier base plate (6.1) which points toward the mirror assembly (5), there is arranged an areal heating element (15) which is arranged spaced apart from the mirror assembly (5) and which generates thermal radiation,
and wherein the thermal radiation (16) is transmitted to a radiation-absorbing coating (13) arranged on the reflective coating (12) of the mirror assembly (5).

2. Rear-view mirror arrangement (1) for motor vehicles according to Claim 1, wherein the areal heating element (15) is adhesively bonded to the carrier base plate (6.1).

3. Rear-view mirror arrangement (1) for motor vehicles according to either of the preceding claims, wherein, between the carrier plate rim (6.2) and mirror assembly (5), there is formed an encircling housing gap into which there is fitted a seal (14) which completely closes off the housing gap in sealing fashion.

## Revendications

1. Système de rétroviseur (1) pour véhicules à moteur, comprenant une plaque de support (6) et un module de rétroviseur (5) comprenant une cellule à cristaux liquides (7) retenue sur la plaque de support (6) pour observer la circulation venant par derrière, le degré de réflexion du module de rétroviseur (5) étant réalisé de manière variable par un dispositif de commande, et le module de rétroviseur (5) présentant une plaque de verre (11) disposée du côté avant et un revêtement réfléchissant (12) tourné du côté arrière vers la plaque de support (6), le système de rétroviseur (1) étant réalisé de manière à pouvoir être chauffé, **caractérisé en ce que** la plaque de support (6) comprend une plaque de fond de support (6.1) et un bord de plaque de support périphérique (6.2), et la plaque de fond de support (6.1) est réalisée avec des points d'appui (6.3) pour supporter le module de rétroviseur (5), et **en ce qu'**entre la plaque de fond de support (6) et le module de rétroviseur (5) subsiste un espace de boîtier (S), et **en ce que** sur la surface de la plaque de fond de support (6.1) tournée vers le module de rétroviseur (5) est disposé un élément de chauffage de surface (15) disposé à distance du module de rétroviseur (5), qui génère un rayonnement thermique, et le rayonnement thermique (16) étant transmis à un revêtement (13) absorbant les rayonnements disposé sur le revêtement réfléchissant (12) du module de rétroviseur (5).

2. Système de rétroviseur (1) pour véhicules à moteur selon la revendication 1, dans lequel l'élément de chauffage de surface (15) est collé à la plaque de fond de support (6.1).

3. Système de rétroviseur (1) pour véhicules à moteur selon l'une quelconque des revendications précédentes, dans lequel entre le bord de plaque de support (6.2) et le module de rétroviseur (5) est réalisé un espace de boîtier périphérique dans lequel est introduit un joint d'étanchéité (14) qui ferme de manière complètement étanche l'espace de boîtier.
